# EUROPEAN PATENT APPLICATION

(11) **EP 4 763 568 A1**
(43) Date of publication of application: **24.06.2026**
(21) Application number: 25218110.2
(22) Date of filing: 24.11.2025
(51) Int. Cl.: B60K 28/06, B60W 50/14

(54) **DRIVING SUPPORT CONTROL DEVICE, DRIVING SUPPORT METHOD, AND COMPUTER PROGRAM**

(30) Priority: 19.12.2024 JP 2024224265
(71) Applicant: Toyota Jidosha Kabushiki Kaisha, Toyota-shi, Aichi-ken 471-8571 (JP)
(72) Inventor: TANAKA, Yusuke, TOYOTA-SHI, AICHI-KEN, 471-8571 (JP); FUKAYA, Motohiro, TOYOTA-SHI, AICHI-KEN, 471-8571 (JP); TOSHIMA, Kohei, TOYOTA-SHI, AICHI-KEN, 471-8571 (JP); MORIMOTO, Kazuhiro, TOYOTA-SHI, AICHI-KEN, 471-8571 (JP)
(74) Representative: Cabinet Beau de Loménie

(57) **Abstract**

The driving support control device (6) for a vehicle (100) is configured to execute driving support for responding to driver abnormality in response to it being judged that a driver of the vehicle (100) is in an abnormal state in which it is difficult to continue driving the vehicle (100), suspend the driving support when a predetermined cancel operation is detected a plurality of times during the driving support, and reset a count value of a detection number of the cancel operation to zero at a predetermined timing during the driving support. The driving support includes notification control being started after it is judged that the driver is in an abnormal state and issuing a notification to the driver, and deceleration control being started after a predetermined time has elapsed since the notification started and decelerating the vehicle (100). The predetermined timing is a timing after the notification control is ended.

## Description

### TECHNICAL FIELD

The present invention relates to a driving support control device, a driving support method, and a computer program.

### BACKGROUND ART

Patent Literature 1 discloses a conventional vehicle driving control device which is configured to judge whether a driver is in an abnormal state, and execute deceleration and stop control decelerating the vehicle and maintaining the vehicle in a stopped state, when the driver is in the abnormal state.

### CITATION LIST

### PATENT LITERATURE

PTL 1 Japanese Unexamined Patent Publication (Kokai) No. 2021-109559

### SUMMARY

### TECHNICAL PROBLEM

If performing a driving support (driving support for driver abnormality) in which notification control performing notification such as alert is first executed and then deceleration and stop control is executed, when it is judged that a driver is in an abnormal state, it is desirable to maintain the vehicle in a stopped state as quickly as possible by making the time period of the notification control as short as possible to initiate deceleration and stop control early.

However, if multiple cancel operations are required to suspend the driving support for driver abnormality in order to prevent the driving support for driver abnormality from being suspended due to an unintended cancel operation by the driver in an abnormal state, shortening the time period of the notification control makes it more difficult to perform multiple cancel operations. This results in a problem where the driver is prevented from suspending the driving support for driver abnormality during the notification control.

The present invention has been conceived in light of this problem, and an object thereof is that the driver is not prevented from suspending driving support for driver abnormality during the time period of the notification control.

### SOLUTION TO PROBLEM

In order to solve the above problem, the driving support control device for a vehicle according to one aspect of the present invention is configured to execute driving support for responding to driver abnormality in response to it being judged that a driver of the vehicle is in an abnormal state in which it is difficult to continue driving the vehicle, suspend the driving support when a predetermined cancel operation is detected a plurality of times during the driving support, and reset a count value of a detection number of the cancel operation to zero at a predetermined timing during the driving support. The driving support includes notification control being started after it is judged that the driver is in an abnormal state and issuing a notification to the driver, and deceleration control being started after a predetermined time has elapsed since the notification started and decelerating the vehicle. The predetermined timing is a timing after the notification control is ended.

Further, the driving support method according to one aspect of the present invention is performed by a control device of a vehicle, and includes executing driving support for responding to driver abnormality in response to it being judged that a driver of the vehicle is in an abnormal state in which it is difficult to continue driving the vehicle, suspending the driving support when a predetermined cancel operation is detected a plurality of times during the driving support, and resetting a count value of a detection number of the cancel operation to zero at a predetermined timing during the driving support. The driving support includes notification control being started after it is judged that the driver is in an abnormal state and issuing a notification to the driver, and deceleration control being started after a predetermined time has elapsed since the notification started and decelerating the vehicle. The predetermined timing is a timing after the notification control is ended.

Further, the computer program according to one aspect of the present invention causes a computer to execute processing of executing driving support for responding to driver abnormality in response to it being judged that a driver of a vehicle is in an abnormal state in which it is difficult to continue driving the vehicle, suspending the driving support when a predetermined cancel operation is detected a plurality of times during the driving support, and resetting a count value of a detection number of the cancel operation to zero at a predetermined timing during the driving support. The driving support includes notification control being started after it is judged that the driver is in an abnormal state and issuing a notification to the driver, and deceleration control being started after a predetermined time has elapsed since the notification started and decelerating the vehicle. The predetermined timing is a timing after the notification control is ended.

### ADVANTAGEOUS EFFECTS OF INVENTION

According to these aspects of the present invention, since the count value of the detection number of the cancel operation is reset to zero at a timing after the notification control is ended, the driver is not prevented from suspending driving support for driver abnormality during the notification control period.

### BRIEF DESCRIPTION OF DRAWINGS

FIG. 1 is a schematic configuration view of a vehicle according to an embodiment of the present invention.
FIG. 2 is a flowchart detailing suspension processing for driving support for driver abnormality according to an embodiment of the present invention.
FIG. 3 is a flowchart detailing counter value reset processing according to an embodiment of the present invention.

### DESCRIPTION OF EMBODIMENTS

Embodiments of the present invention will be described in detail below with reference to the drawings. Note that in the following description, identical constituent elements have been assigned the same reference signs.

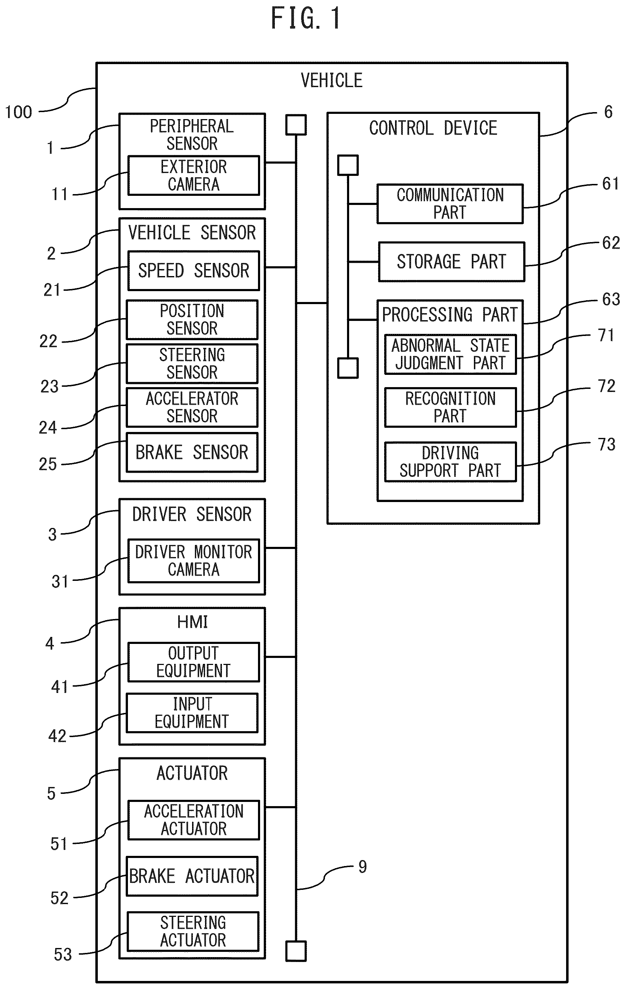

FIG. 1 is a schematic view of a vehicle 100 according to an embodiment of the present invention.

The vehicle 100 includes a peripheral sensor 1, a vehicle sensor 2, a driver sensor 3, a human machine interface (HMI) 4, an actuator 5, and a control device 6. The peripheral sensor 1, the vehicle sensor 2, the driver sensor 3, the HMI 4, the actuator 5, and the control device 6 are communicatively connected to each other via an in-vehicle network 9 which complies with a standard such as controller area network.

The peripheral sensor 1 is a sensor for generating peripheral data representing the situation around the vehicle 100. The vehicle 100 according to the present embodiment includes, as the peripheral sensor 1, one or a plurality of exterior cameras 11 for capturing the surroundings of the vehicle 100. The exterior camera 11 captures the surroundings of the vehicle 100 at a predetermined frame rate (for example, 10 [Hz] to 40 [Hz]) and generates a surrounding image showing the surroundings of the vehicle 100. The exterior camera 11 transmits the generated surrounding image to the control device 6 as surrounding data every time it generates a surrounding image.

In addition to the exterior camera 11, a ranging sensor for measuring the distance to a target or a feature present around the vehicle 100 may be provided as the peripheral sensor 1. Examples of the ranging sensor include LiDAR (Light Detection And Ranging) which irradiates radar light and measures distance based on the reflected light, and a millimeter wave radar sensor which irradiates radio waves and measures distance based on the reflected waves.

The vehicle sensor 2 is a sensor for acquiring vehicle data representing the state of the vehicle 100. The vehicle 100 according to the present embodiment includes, as the vehicle sensor 2, a speed sensor 21 for acquiring speed data representing the traveling speed of the vehicle 100, a position sensor 22 for acquiring current position data representing the current position of the vehicle 100 such as latitude and longitude, a steering sensor 23 for acquiring data related to steering operations such as steering grip, steering torque, steering angle, etc., an accelerator sensor 24 for acquiring data related to accelerator operation such as the amount of depression of the accelerator pedal, and a brake sensor 25 for acquiring data related to brake operation such as detection of operation input of the brake pedal. However, the vehicle sensor 2 is not limited to these sensors. Each type of data acquired by each sensor 21 to 25 is transmitted to the control device 6 as vehicle data.

The driver sensor 3 is a sensor for generating driver data representing the state of the driver. The vehicle 100 according to the present embodiment includes, as the driver sensor 3, a driver monitor camera 31 for capturing the appearance of the driver including the face of the driver. The driver monitor camera 31 captures the appearance of the driver at a predetermined frame rate (for example, 10 [Hz] to 40 [Hz]) and generates an appearance image showing the appearance of the driver. The driver monitor camera 31 transmits the generated appearance image to the control device 6 as driver data every time it generates an appearance image of the driver.

The HMI 4 is a user interface for exchanging information between the vehicle 100 and the occupants thereof. The HMI 4 includes output equipment 41 for notifying the vehicle occupants via the bodily senses (for example, vision, hearing, touch, etc.) of the vehicle occupants, and input equipment 42 with which the vehicle occupants can perform input operations and response operations. The output equipment 41 is, for example, a display (for example, a meter display, a center display, a heads-up display, etc.) and a speaker. The input equipment 42 is, for example, a touch panel and a microphone.

The HMI 4 notifies the vehicle occupants of information corresponding to the output signal received from the control device 6 via the output equipment 41, and transmits data input by the vehicle occupants to the control device 6 via the input equipment 42.

The HMI 4 may be installed in advance in the vehicle 100, or may be a terminal such as a smartphone owned by the vehicle occupants (driver and passengers). In the latter case, for example, information may be exchanged between the vehicle 100 and the terminal of the vehicle occupants by short-range wireless communication, or information may be exchanged indirectly via the server by communicating between the terminal of the vehicle occupants and an external server (not illustrated).

The actuator 5 is a device used for driving control of the vehicle 100. The vehicle 100 according to the present embodiment includes, as the actuator 5, an acceleration actuator 51 (for example, at least one of an engine and a motor) for performing acceleration control of the vehicle 100, a brake actuator 52 (for example, a hydraulic actuator) for performing brake control of the vehicle 100, and a steering actuator 53 (for example, a steering motor) for performing steering control of the vehicle 100.

The control device 6 is an electronic control unit (ECU) including a communication part 61, a storage part 62, and a processing part 63.

The communication part 61 includes an interface circuit for connecting the control device 6 to the in-vehicle network 9. The communication part 61 supplies various data received from the outside to the processing part 63. The communication part 61 also outputs various signals output from the processing part 63 to the outside.

The storage part 62 includes a storage medium such as a hard disk drive (HDD), a solid disk drive (SSD), or a semiconductor memory, and stores various computer programs and data used in the processing by the processing part 63.

The processing part 63 includes one or more central processing units (CPUs) and peripheral circuits therefor, and executes various computer programs stored in the storage part 62. The processing part 63 is, for example, a processor. The processing part 63 may further include other arithmetic circuits such as a logic arithmetic unit, a numerical arithmetic unit, or a graphic processing unit. The processing part 63 executes processing in accordance with the computer programs, thereby functioning as an abnormal state judgment part 71, a recognition part 72, and a driving support part 73, and operates as a functional part (module) for realizing predetermined functions. In the following description, when processing in which the functional parts 71 to 73 are the subject is described, it indicates that the processing part 63 is executing a program for realizing each of the functional parts 71 to 73.

Specific processing executed by the control device 6 will be described below. Specifically, the contents of each of the functional parts 71 to 73 realized by the processing part 63 executing the processing according to the computer program will be described.

The abnormal state judgment part 71 judges whether the driver has entered into an abnormal state (hereinafter simply referred to as an "abnormal state") in which it is difficult to continue driving due to, for example, a sudden change in physical condition, etc. In the present embodiment, the abnormal state judgment part 71 judges that the driver has entered into an abnormal state when a predetermined abnormality presumption state continues for a predetermined judgment time T1 [s].

The abnormality presumption state is a state in which the driver is considered to be in an abnormal state. Examples of abnormality presumption states include a state in which the driver has their eyes closed, a state in which the posture of the driver is distorted, and a state in which the driver is not operating the steering wheel unless the driving support that allows hands-free driving is being executed. A state in which the posture of the driver is distorted is, for example, a state in which the driver lies face down, looks down, or leans back due to muscle relaxation caused by loss of consciousness, or the head or upper body of the driver is tilted or fallen to the side, or a state in which the driver is arched due to rigidity caused by epilepsy, etc.

Whether the driver has their eyes closed, the posture of the driver is distorted, or the steering wheel is not being operated can be judged from, for example, the appearance of the driver based on the image of the driver monitor camera 31. Furthermore, whether the steering wheel is not being operated can be judged based on, for example, when data related to the steering operation is acquired by the steering sensor 23, such data and the image of the driver monitor camera 31.

The recognition part 72 recognizes targets and features around the vehicle 100. The recognition part 72 sequentially inputs the surrounding images received from the exterior camera 11 to a classifier, for example, to recognize targets in the surrounding images, such as other vehicles, motorcycles, and pedestrians, and features such as curbs, fences, and other similar structures (hereinafter referred to as "dividing features") and road markings (for example, dividing lines that define driving lanes). The classifier can be, for example, a convolutional neural network (CNN) having multiple convolution layers connected in series from the input side to the output side. The recognition part 72 also calculates the distances from the vehicle 100 to the targets and features using, for example, the standard sizes of the targets and features stored in the storage part 62 for each type of target and feature and the sizes of the targets and features recognized in the surrounding images, and calculates the positions of the targets and features. Note that the method of recognizing the targets and features is not limited to this method, and various known methods may be used for recognition.

The driving support part 73 controls the actuator 5 based on the targets and features recognized by the recognition part 72, and executes driving support involving driving control of the vehicle 100. In the present embodiment, the driving support part 73 can execute driving support involving driving control of the vehicle 100 at a driving control level of level 3 defined by the Society of Automotive Engineers (SAE), and specifically, a driving control level that does not require the driver to operate each of the actuators 51 to 53 and monitor the surroundings. The driving support part 73 can also execute driving support involving driving control of the vehicle 100 at a driving control level where the driver is involved in driving the vehicle 100, for example, a driving control level of level 1 or level 2 as defined by the SAE.

As one of the driving supports accompanying the driving control of the vehicle 100, when the driver is judged to be in an abnormal state, the driving support part 73 executes driving support for driver abnormality to respond to the driver abnormality. Specifically, when it is judged that the driver is in an abnormal state, the driving support part 73 first executes notification control to notify the driver of a control notice (alarm), etc., via the HMI 4. Thereafter, after a predetermined time T2 [s] has elapsed since starting the notification, the driving support part 73 executes deceleration and stop control to decelerate the vehicle 100 and maintain the vehicle 100 in a stopped state. Specifically, the driving support for driver abnormality includes the notification control, and the deceleration and stop control including deceleration control and stop maintenance control.

Furthermore, how the vehicle 100 is decelerated and stopped is not particularly limited as long as the risk of contact with road users outside the vehicle when executing the deceleration and stop control is taken into consideration. For example, when the dividing line of the lane of the vehicle can be recognized, the vehicle 100 is decelerated along the dividing line of the lane of the vehicle and maintained in the stopped state, when the dividing line of the lane of the vehicle cannot be recognized, the vehicle 100 is decelerated along the trajectory of the vehicle ahead and maintained in the stopped state, and when neither the dividing line of the lane of the vehicle nor the vehicle ahead can be recognized, the vehicle 100 can be decelerated while moving straight and maintained in the stopped state. Furthermore, for example, in consideration of the rescue of the driver and the safety of disembarkation of passengers, the lane may be changed to move the vehicle to the lane on the roadway side or to the shoulder.

Furthermore, the driving support part 73 suspends the driving support for driver abnormality when the predetermined suspension condition is established during the driving support. The suspension condition is a condition in which it can be determined that the driver is in a normal state in which driving can be continued.

For example, in the present embodiment, it is judged that a cancel operation for the driving support for driver abnormality has been performed once each time any one of a steering operation, an accelerator operation, and a brake operation is performed once (i.e., each time an override by the driver is performed once), and detecting the cancel operation multiple times is made the suspension condition for the driving support for driver abnormality. Specifically, in the present embodiment, the suspension condition for the driving support for driver abnormality is that the count value N of the detection number of the cancel operation is equal to or greater than a predetermined suspension judgment threshold NTH. Though the value of the suspension judgment threshold NTH is set to 2 in the present embodiment, the suspension judgment threshold NTH can be set to any value which is equal to or greater than 2. Note that in the present embodiment, regarding whether each of the steering operation, accelerator operation, and brake operation has been performed, for example, when the operation change amount of each operation becomes equal to or greater than a predetermined amount or simply when an operation input for each operation is detected, it may be judged that the operation has been performed.

As a result, even if it is mistakenly judged that the driver is in an abnormal state and the driving support for driver abnormality is started despite the driver being in a normal state, the driver can suspend the driving support for driver abnormality by establishing the suspension condition. Furthermore, since a plurality of times of the cancel operation are required to suspend the driving support for driver abnormality, even if a driver who has fallen into an abnormal state such as a tense, stiff, or relaxed state performs a single unintentional steering operation or pedal operation (i.e., override), the driving support for driver abnormality will not be suspended. Thus, suspension of the driving support for driver abnormality despite the driver being in an abnormal state due to an unintentional override can be prevented.

However, in the case in which a plurality of times of the cancel operation are required to suspend the driving support for driver abnormality, when the count value N of the detection number of the cancel operation continues to be maintained throughout the driving support for driver abnormality, there is a problem in that the driving support for driver abnormality can more easily be suspended by means of an unintentional cancel operation as time progresses in the driving support.

Examples of means to address this problem include resetting to zero the count value N of detection number of the cancel operation at a predetermined timing during the driving support for driver abnormality. However, if the timing for resetting the count value N is not set to an appropriate timing, the following secondary problems may occur.

Specifically, in the manner of the present embodiment, when it is judged that the driver has fallen into an abnormal state, if notification control is executed first and deceleration and stop control is then executed, it is desirable to start deceleration and stop control early with the notification control period being the minimum required period and to maintain the vehicle in a stopped state as soon as possible. Furthermore, when the driver is judged to be in an abnormal state despite being in a normal state and deceleration and stop control is actually started, the vehicle will be decelerated against the will of the driver. Thus, when it is judged that the driver is in an abnormal state despite being in a normal state, it is desirable to not hinder the driver from establishing the suspension condition during the notification control period before the deceleration and stop control is actually started.

However, if the timing for resetting the count value N is set to the notification control period, the shorter the notification control period, the more difficult it becomes for the driver to establish the suspension condition, which will prevent the driver from establishing the suspension condition during the notification control period.

Thus, in the present embodiment, when a plurality of times of cancel operations are required to suspend the driving support for driver abnormality, the timing for resetting the count value N is set to a timing after the time point when the notification control ends in order to not prevent the driver from establishing the suspension condition during the notification control period.

As a result, the driving support can be prevented from being more easily suspended in the latter half of the driving support for driver abnormality, without preventing the driver from establishing the suspension condition for the driving support for driver abnormality during the notification control period.

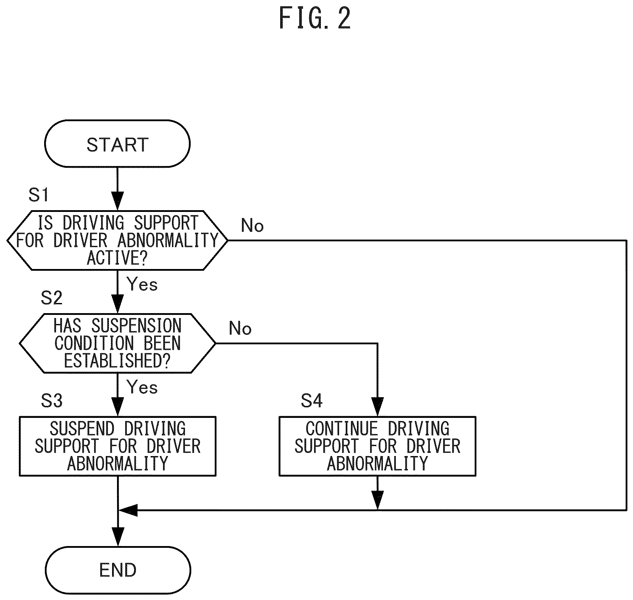

FIG. 2 is a flowchart detailing the processing for suspending the driving support for driver abnormality according to the present embodiment, which is executed by the driving support part 73, and in turn, the control device 6. The control device 6 repeatedly executes this routine at a predetermined calculation cycle.

In step S1, the control device 6 judges whether the vehicle is in driving support for driver abnormality. When the vehicle is in driving support for driver abnormality, the control device 6 proceeds to the processing of step S2. Conversely, when the vehicle is not in driving support for driver abnormality, the control device 6 ends the current processing.

In step S2, the control device 6 judges whether the suspension condition for driving support for driver abnormality has been established. Specifically, as described above, the control device 6 judges whether the count value N of the detection number of the cancel operation is equal to or greater than the suspension judgment threshold NTH. When the count value N is equal to or greater than the suspension judgment threshold NTH, and specifically, when the suspension condition for the driving support for driver abnormality has been established, the control device 6 proceeds to the processing of step S3. Conversely, when the count value N is less than the suspension judgment threshold NTH, and specifically, when the suspension condition for the driving support for driver abnormality has not been established, the control device 6 proceeds to the processing of step S4.

In step S3, the control device 6 suspends the driving support for driver abnormality.

In step S4, the control device 6 continues the driving support for driver abnormality.

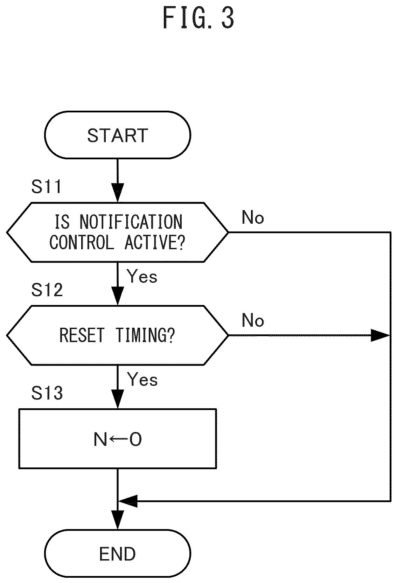

FIG. 3 is a flowchart detailing the reset processing of the counter value N according to the present embodiment, which is executed by the driving support part 73 and, in turn, the control device 6. The control device 6 repeatedly executes this routine at a predetermined calculation cycle.

In step S11, the control device 6 judges whether or not the notification control of the driving support for driver abnormality is active. When the notification control is active, the control device 6 proceeds to the processing of step S12. Conversely, when the notification control is not active, the control device 6 ends this processing.

In step S12, the control device 6 judges whether the predetermined reset timing during deceleration control after the notification control has been reached. When the reset timing has been reached, the control device 6 proceeds to the processing of step S13. Conversely, when the reset timing has not been reached, the control device 6 ends this processing.

In the present embodiment, the reset timing is, for example, the initial time point of deceleration control (for example, a time point when the elapsed time since the start of the deceleration control is within a predetermined time, or a time point when the amount of speed change since the start of deceleration control is greater than or equal to a predetermined amount).

As a result of rigorous investigation by the inventors, it has been found that as a typical example of an event in which an unintentional cancel operation is executed a plurality of times during the driving support for driver abnormality, there is an event in which the driver loses consciousness while holding the steering wheel and enters an abnormal state, and a steering operation is detected as a first cancel operation during the notification control stage, and thereafter, during the subsequent deceleration control, shocks or vibrations caused by deceleration lead to unintentional steering or pedal operations, which is detected as a second cancel operation.

Thus, by setting the reset timing to an arbitrary initial time point of the deceleration control, unintentional steering or pedal operation during the deceleration control can be prevented from being detected as a second cancel operation, thereby further preventing the driving support for driver abnormality from being suspended due to an unintentional cancel operation despite the driver being in an abnormal state.

In step S13, the control device 6 resets the count value N of the detection number of the cancel operation to zero.

The control device 6 (driving support control device) of the vehicle 100 according to the present embodiment described above is configured to execute driving support for driver abnormality for responding to the driver abnormality in response to it being judged that the driver of the vehicle 100 is in an abnormal state in which it is difficult to continue driving the vehicle 100, suspend the driving support for driver abnormality when a predetermined cancel operation is detected a plurality of times during the driving support, and reset a count value of a detection number the cancel operation to zero at a predetermined reset timing during the driver abnormality response. The driver abnormality response includes notification control being started after it is judged that the driver is in an abnormal state issuing a notification to the driver, and deceleration control being started after a predetermined time has elapsed since the notification started and decelerating the vehicle 100. The reset timing is a timing after the notification control is ended.

Thus, according to the present embodiment, since the count value of the detection number of the cancel operation is reset to zero at a timing after the notification control is ended, the driving support for driver abnormality can be prevented from being easily suspended in the latter half of the driving support without preventing the driver from establishing the suspension condition for the driving support for driver abnormality during the notification control period.

In particular, in the manner of the present embodiment, by setting the reset timing to an arbitrary initial time point of deceleration control, an unintentional steering operation or pedal operation during the deceleration control can be prevented from being detected as a second cancel operation, thereby further preventing the driving support for driver abnormality from being suspended due to an unintentional cancel operation despite the driver being in an abnormal state.

Though the embodiments of the present invention have been described above, the embodiments described above merely illustrate some of the application examples of the present invention, and are not intended that the technical scope of the present invention be limited to the specific configurations of the embodiments described above.

Furthermore, for example, in the embodiments described above, the computer program executed by the control device 6 may be provided in a form recorded on a computer-readable portable recording medium such as a semiconductor memory, a magnetic recording medium, or an optical recording medium, or may be provided as a computer program product.

### DESCRIPTION OF REFERENCE SIGNS

- 6: control device (driving support control device)
- 100: vehicle

## Claims

1. A driving support control device (6) for a vehicle (100), configured to:
execute driving support for responding to driver abnormality in response to it being judged that a driver of the vehicle (100) is in an abnormal state in which it is difficult to continue driving the vehicle (100);
suspend the driving support when a predetermined cancel operation is detected a plurality of times during the driving support; and
reset a count value of a detection number of the cancel operation to zero at a predetermined timing during the driving support, wherein
the driving support includes notification control being started after it is judged that the driver is in an abnormal state and issuing a notification to the driver, and deceleration control being started after a predetermined time has elapsed since the notification started and decelerating the vehicle (100), and
the predetermined timing is a timing after the notification control is ended.

2. The driving support control device (6) according to claim 1, wherein the predetermined timing is an initial time point of the deceleration control.

3. The driving support control device (6) according to claim 1 or claim 2, wherein the cancel operation includes a steering operation of the vehicle (100) and a pedal operation of the vehicle (100).

4. A driving support method for a vehicle (100), including:
executing driving support for responding to driver abnormality in response to it being judged that a driver of the vehicle (100) is in an abnormal state in which it is difficult to continue driving the vehicle (100);
suspending the driving support when a predetermined cancel operation is detected a plurality of times during the driving support; and
resetting a count value of a detection number of the cancel operation to zero at a predetermined timing during the driving support, wherein
the driving support includes notification control being started after it is judged that the driver is in an abnormal state and issuing a notification to the driver, and deceleration control being started after a predetermined time has elapsed since the notification started and decelerating the vehicle (100), and
the predetermined timing is a timing after the notification control is ended.

5. A computer program comprising instructions which, when the program is executed by a computer, which causes the computer to execute processing of:
executing driving support for responding to driver abnormality in response to it being judged that a driver of a vehicle (100) is in an abnormal state in which it is difficult to continue driving the vehicle (100);
suspending the driving support when a predetermined cancel operation is detected a plurality of times during the driving support; and
resetting a count value of a detection number of the cancel operation to zero at a predetermined timing during the driving support, wherein
the driving support includes notification control being started after it is judged that the driver is in an abnormal state and issuing a notification to the driver, and deceleration control being started after a predetermined time has elapsed since the notification started and decelerating the vehicle (100), and
the predetermined timing is a timing after the notification control is ended.
